# EUROPÄISCHE PATENTSCHRIFT

(11) **EP 2 782 747 B1**
(45) Veröffentlichungstag und Bekanntmachung des Hinweises auf die Patenterteilung: **27.04.2016**
(21) Anmeldenummer: 12813740.3
(22) Anmeldetag: 22.11.2012
(51) Int. Cl.: B29C 70/44, B29C 43/36, B29C 43/12

(54) **UMFORMEN EINES PROFILIERTEN PREPREG-BAUTEILS**
DEFORMING A PROFILED PREPREG COMPONENT
FORMAGE DES SEMI-PRODUITS PROFILÉS PRÉIMPRÉGNÉS

(30) Priorität: 22.11.2011 DE 102011119046
(43) Veröffentlichungstag der Anmeldung: 01.10.2014
(73) Patentinhaber: Premium AEROTEC GmbH, 86179 Augsburg (DE)
(72) Erfinder: GENSEWICH, Christian, 26954 Nordenham (DE); EISENBEISS, Fred, 26969 Butjadingen Eckwarden (DE)
(74) Vertreter: Krebs, Jörg
(86) Internationale Anmeldenummer: PCT/DE2012/001112
(87) Internationale Veröffentlichungsnummer: WO 2013/075694

(56) Entgegenhaltungen:
- EP-A1- 2 070 678
- EP-A2- 0 733 454
- WO-A1-2008/119114
- DE-A1-102010 014 545
- US-A- 4 038 014
- US-A- 4 608 220
- US-A- 5 242 652
- DATABASE WPI Week 199953 Thomson Scientific, London, GB; AN 1999-614712 XP002694849, -& JP 11 268067 A (MATSUSHITA ELECTRIC WORKS LTD) 5. Oktober 1999 (1999-10-05)
- DATABASE WPI Week 199953, Derwent Publications Ltd., London, GB; AN 1999-614712 & JP H11 268 067 A (MATSUSHITA ELECTRIC WORKS LTD) 05 Oktober 1999

## Beschreibung

Die vorliegende Erfindung betrifft eine Umformvorrichtung zur Herstellung eines profilierten Bauteils und ein Verfahren zur Herstellung eines profilierten Bauteils.

Profilierte Bauteile werden beispielsweise bei Fahrzeugstrukturen verwendet, z.B. bei lastabtragenden Strukturen. Profilierte Bauteile werden beispielsweise als gekrümmte Strukturbauteile bei der Rumpfkonstruktion eines Luftfahrzeugs, z.B. eines Flugzeugs, verwendet, z.B. als Stringer oder Spant. Die profilierten Bauteile werden beispielsweise aus einem flachen Halbzeug durch entsprechendes Umformen hergestellt. Im Zusammenhang mit den Anstrengungen eines reduzierten Kraftstoffverbrauchs und dem damit einhergehenden Bestreben eines möglichst geringen Gewichts, werden profilierte Bauteile beispielsweise aus faserverstärktem Verbundwerkstoff hergestellt. Dazu werden beispielsweise Faserstrukturen zusammen mit einem Matrixmaterial auf einer Form in der entsprechenden Profilierung aufgelegt und anschließend durch entsprechende Druck- und Erhitzungsschritte zu dem fertigen profilierten Bauteil ausgehärtet. Zum Aufbringen des dazu erforderlichen Drucks sind beispielsweise Vakuumfolien bekannt, die sich über das ausgelegte Halbzeug in Form der, beispielsweise mit einem Matrixwerkstoff getränkten, Faserlagen erstrecken, so dass durch Aufbringen eines Vakuums im Bereich zwischen einer Grundplatte und der Vakuumfolie ein entsprechender Druck auf das Halbzeug aufgebracht werden kann. Dabei erfolgt ein Anliegen des Halbzeugs an die zugrundeliegende Formvorgabe. Neben einem Auslegen einzelner Faserlagen in die vorgegebene Form hinein werden auch als sogenannte Prepregs vorbereitete Matten verwendet, die aus mehreren Lagen von Fasermatten und einem aufgebrachten Binder, bzw. Matrixmaterial bestehen, so dass die auf die Form ausgelegte Matte sich zunächst nur ungefähr der Form anpasst und nicht exakt anliegt. Das exakte Anliegen, also in gewissem Maße ein Umformen, erfolgt dann mittels der Vakuumfolie. Daher wird für dieses Verfahren auch der Begriff Diaphragma-Umformung verwendet. Zur Herstellung profilierter Bauteile ist außerdem bekannt, einzelne Profilsegmente zu einem profilierten Bauteil zusammenzusetzen. Beispielsweise können flache Profilbereiche mit einem sogenannten Omega-Profil kombiniert werden, um eine Art Hohlprofil zu bilden. Die Verbindung erfolgt beispielsweise mittels Verkleben, z.B. unter Einwirkung von Wärme und Druck. Aus der EP 2 253 460 A2 ist beispielsweise ein Verbindungssystem für Komposit- und Metallkomponenten bekannt, bei dem die zu verbindenden Bereiche durch Druckkammern gegeneinander gepresst werden, wobei die Druckkammern mit einer dehnbaren und elastisch verformbaren Membran ausgestattet sind, so dass in der Druckkammer über ein Fluid ein Druck aufgebracht werden kann, um gleichmäßig auf die zu verbindenden Flächen einzuwirken. Die zu verbindenden Flächen sind vorgeformt, so dass die elastische Membran ein gleichmäßiges Andrücken sicherstellt. Die Druckkammern sind in Gehäusestrukturen untergebracht, die lediglich im Bereich der anzudrückenden Verbindung eine elastisch verformbare Membran aufweisen. Das aus der EP 2 253 460 A2 bekannte Verfahren benötigt jedoch für die Verbindung mehrerer Profilbereiche das Vorfertigen der einzelnen, bereits fertig profilierten Profilelemente. Es hat sich jedoch gezeigt, dass die Handhabung von Fasermatten, beispielsweise Prepregs, und das erforderliche Einlegen in eine Formstruktur aufwendig, und damit kostenintensiv ist. Außerdem ist das Anpressen eines Halbzeugs mittels der Diaphragma-Umformung für enge Innenradien unzureichend, da in diesen Bereichen mittels der Vakuumfolie oftmals nur ein zu geringer Druck aufgebracht werden kann.

Daher besteht ein Bedürfnis darin, eine vereinfachte Herstellung eines profilierten Bauteils mit einer verbesserten Bauteilqualität zur Verfügung zu stellen.

Eine Umformvorrichtung zur Herstellung eines profilierten Bauteils nach dem Oberbegriff des Anspruchs 1 sowie ein Verfahren zur Herstellung eines profilierten Bauteils nach dem Oberbegriff des Anspruchs 12 sind aus der DE 10 2010 014 545 A1 bekannt.

Die gattungsgemäße Umformvorrichtung weist eine Auflegeeinrichtung, eine Andrückeinrichtung und eine Druckvermittlungseinrichtung auf. Die Auflegeeinrichtung weist eine Auflageoberfläche zum Auflegen eines zu formenden Halbzeugs auf. Die Andrückeinrichtung ist zum Andrücken des zu formenden Halbzeugs an die Auflageoberfläche vorgesehen. Die Druckvermittlungseinrichtung weist eine biegeweiche Hülle auf zum Anliegen an dem Halbzeug in einem nicht verformten ersten Zustand und zum Anliegen in einem umgeformten zweiten Zustand. Die Druckvermittlungseinrichtung ist zwischen der Andrückeinrichtung und einem zu formenden Halbzeug anordenbar. Die Andrückeinrichtung weist eine biegeweiche Fläche auf, die an der Druckvermittlungseinrichtung anliegt, wobei die biegeweiche Fläche die Kraft für die Umformung auf die Druckvermittlungseinrichtung überträgt.

Bei der DE 10 2010 014 545 A1 ist die Umformvorrichtung zur Herstellung eines Verbundbauteils aus faserverstärktem Kunststoff vorgesehen, wobei ein Prepreg-Halbzeug mit einem flexiblen Flächenmaterial umhüllt ist, und wobei ein Teil dieses umhüllenden Flächenmaterials selbst als Druckvermittlungseinrichtung betrachtet werden kann.

Ein Nachteil dieser bekannten Lösung besteht darin, dass es auf Grund der Umhüllung des Prepreg-Halbzeugs mit dem flexiblen Flächenmaterial schwerlich möglich ist, bei dem Halbzeug im umgeformten Zustand enge Radien der Bauteilprofilierung auszubilden.

Aus der JP-H-11 268 067 ist es bekannt, bei der Herstellung eines profilierten faserverstärkten Kunststoffbauteils ein Druckkissen ("pressing bag"), welches z. B. mit Luft, Wasser oder Öl befüllbar ist, in einem Bereich zwischen einer Auflegeeinrichtung und dem zu formenden Bauteil anzuordnen, um durch eine Anlage des Druckkissens an einer Innenfläche eines an dieser Stelle konvexen Teils des Bauteils zu verhindern, dass das Bauteil bzw. dessen konvexe Form auf Grund der von der Außenseite her aufgebrachten Andrückkraft deformiert wird.

Aus der WO 2008/119114 A1 sind eine Vorrichtung und ein Verfahren zum Formen oder Aushärten eines faserverstärkten Verbundmaterials bekannt. Bei diesem Stand der Technik wird das Material mit einer ersten flexiblen Lage überdeckt und die erste Lage mit einer zweiten Lage überdeckt, um dazwischen eine Kammer auszubilden, durch welche hindurch heißer Dampf strömen gelassen wird.

Aus der EP 0 733 454 A2 ist ein Auflager für einen Gummiformkörper, insbesondere einen Luftreifen bekannt, zur Aufnahme und Übertragung von Druckkräften, insbesondere eines Vulkanisierdruckes.

Es ist eine Aufgabe der vorliegenden Erfindung, eine Vorrichtung und ein Verfahren der vorstehend erläuterten Art zur Verfügung zu stellen, mit denen eine einfache Herstellung eines profilierten Bauteils mit einer guten Bauteilqualität ermöglicht wird, wobei insbesondere auch stärkere Profilierungen des Bauteils bewerkstelligbar sein sollen.

Diese Aufgabe wird gemäß der Erfindung gelöst durch eine Vorrichtung nach Anspruch 1 bzw. ein Verfahren nach Anspruch 12. Die abhängigen Ansprüche betreffen vorteilhafte Weiterbildungen der Erfindung.

Die Grundidee der erfindungemäßen Lösung besteht darin, ein einfach zu realisierendes Andrücken eines profilierten Bauteils unter Verwendung einer Druckvermittlungseinrichtung mit einer drückübertragenden und verformbaren Füllung vorzusehen, um z. B. enge Radien der Bauteilprofilierung auszubilden. Dies wird durch die Gestaltung der Druckvermittlungseinrichtung mit einer biegeweichen Hülle zum Halten eines in der Druckvermittlungseinrichtung eingeschlossenen Volumens der Füllung realisiert.

Der Begriff "profiliert" bezeichnet beispielsweise ein im Querschnitt mit einem Profil ausgebildetes längliches Bauteil. Der Begriff "profiliert" bezieht sich auch auf ein in einer Längsrichtung gekrümmtes, längliches Bauteil. Darüber hinaus bezeichnet "profiliert" auch ein Bauteil, das in der Querrichtung mit einem Querschnittsprofil ausgebildet ist, und das zudem in der Längsrichtung gekrümmt ausgebildet ist.

Der Begriff "Umformen" umfasst beispielsweise das Anliegen eines zunächst flachen Halbzeugs, beispielsweise eines mehr oder weniger ebenen Halbzeugs, an eine als formgebende Struktur vorgesehene Auflageoberfläche.

Der Begriff "biegeweiche Hülle" bezeichnet einen Hüllwerkstoff, der ähnlich wie eine Folie verbogen bzw. verformt werden kann und sich damit an verschiedene Profilierungen anpassen lässt, der jedoch in der Längsrichtung, d.h. in Richtung der Hüllfläche nicht dehnbar und nicht elastisch ist. Die biegeweiche Hülle muss auf jeden Fall in der Lage sein, das eingeschlossene Volumen zu halten, d.h. es muss ein aufgebrachter Druck auch weitergegeben werden können.

Der Begriff biegeweichen Fläche" bezeichnet eine Fläche zum Anliegen an der Druckvermittlungseinrichtung, die zumindest in der Flächenebene derart weich ist, dass sie sich an unterschiedliche Konturen der Druckvermittlungseinrichtung anpassen kann. Die biegeweiche Fläche kann als zugfeste Membran oder Folie ausgebildet sein. Die biegeweiche Fläche kann auch als elastische Membran oder Folie ausgebildet sein. Die biegeweiche Fläche kann auch ein in seiner Form, d.h. seiner Oberflächenform anpassbares Laminat oder ein biegeweiches Plattenelement sein.

Gemäß einem Ausführungsbeispiel ist das zu formende Halbzeug ein faserverstärkter Verbundwerkstoff.

Beispielsweise weist der faserverstärkte Verbundwerkstoff ein Kompositlaminat auf. Der Begriff "Kompositlaminat" bezeichnet einen Werkstoff, der neben einem faserverstärkten Verbundwerkstoff auch weitere Materiallagen und/oder Materialeinlagen aufweisen kann, wie z.B. ein Metallgewebe, eine Metallfolie und dergleichen. Das geformte Halbzeug dient beispielsweise nach Durchlaufen weiterer Arbeitsschritte als Stringer oder Spant eines Luftfahrzeugs. Die weiteren Arbeitsschritte können beispielsweise ein Aushärten des geformten profilierten Halbzeugs beinhalten.

Die Auflageoberfläche weist beispielsweise konkave, bzw. rückspringende Bereiche auf, z.B. Bereiche mit innenliegenden Kanten und/oder innenliegenden Ecken.

Die Auflageoberfläche bildet ein Formgegenstück für die Umformung des zu formenden Halbzeugs.

Das zu formende Halbzeug ist z.B. als eine eigenstabile Platte vorgesehen, d.h. eine sich selbst tragende Platte, die sich nach einem Auflegen auf die Auflageoberfläche nicht, bzw. nur sehr gering an die darunter befindliche Struktur der Auflageoberfläche anpasst.

Gemäß einer weiteren Ausführungsform ist die Druckvermittlungseinrichtung umlaufend mit einer biegeweichen Hülle versehen.

Beispielsweise bildet die Druckvermittlungseinrichtung eine mit einem Fluid gefüllte Blase.

Gemäß einer weiteren Ausführungsform liegt die biegeweiche Fläche der Andrückeinrichtung auf der einen Seite an der Druckvermittlungseinrichtung an und ist auf der anderen Seite mit einem Fluid mit Druck beaufschlagbar zur Kraftübertragung für die Umformung. Für die Druckbeaufschlagung ist vorgesehen, dass:
i) die biegeweiche Fläche ein mit Druck beaufschlagbares Volumen bildet; oder
ii) die biegeweiche Fläche eine Vakuummembran ist, wobei eine Vakuumeinrichtung vorgesehen ist zur Erzeugung eines Unterdrucks in einem Bereich zwischen der Vakuummembran und der Auflageoberfläche derart, dass ein von außen auf die Vakuummembran einwirkender Umgebungsluftdruck ein Umformen durch Anlegen des Halbzeugs an die Auflageoberfläche bewirkt

Das mit Druck beaufschlagbare Volumen wird beispielsweise mit einem Fluid, z.B. Druckluft oder ein anderes druckübertragendes Medium wie Wasser oder Öl, gefüllt, bzw. es wird ein Druck auf das Fluid aufgebracht.

Die Vakuummembran ist beispielsweise eine Vakuumfolie. Die Vakuumeinrichtung ist beispielsweise eine Vakuumpumpe, die mit dem Bereich zwischen der Vakuummembran und der Auflageoberfläche in Verbindung steht.

In einem Beispiel ist die Druckvermittlungseinrichtung in der Vakuummembran integriert ausgebildet.

Beispielsweise ist die Vakuummembran mehrlagig ausgebildet und weist zumindest teilweise einen mit der druckübertragenden und verformbaren Füllung versehenen Hohlraum auf.

Gemäß einer weiteren Ausführungsform ist die biegeweiche Fläche der Andrückeinrichtung derart an Haltepunkten gehalten, dass die biegeweiche Fläche sowohl im nicht verformten ersten Zustand als auch im umgeformten zweiten Zustand eine konvexe Kontur bildet. Die biegeweiche Fläche ist zur Kraftübertragung für die Umformung mit einer Zugspannung beaufschlagbar.

In einem weiteren Beispiel ist die Druckvermittlungseinrichtung mit der biegeweichen Fläche integriert ausgebildet, z.B. integriert mit einer auf Zug belastbaren Folie.

Gemäß einer weiteren Ausführungsform weist die Druckvermittlungseinrichtung als Füllung wenigstens eines aus der Gruppe von gasförmigen Fluiden, Flüssigkeiten, Gelen und losen Festkörperschüttungen auf.

Beispielsweise weist die druckübertragende und verformbare Füllung ein fluides Medium auf. Gemäß einem Beispiel ist die Flüssigkeit druckstabil. Die Füllung kann z.B. eine hochviskose Füllung sein.

Gemäß einer weiteren Ausführungsform weist die Füllung der Druckvermittlungseinrichtung eine dynamische Viskosität von mindestens 100 Pa·s auf.

Gemäß einem weiteren Ausführungsbeispiel weist die Druckvermittlungseinrichtung ein derartiges Volumen auf, dass bei Anliegen der Druckvermittlungseinrichtung an der Auflageoberfläche sämtliche Einbuchtungen der Auflageoberfläche durch die Druckvermittlungseinrichtung aufgefüllt sind, so dass die Vakuummembran eine konvexe Hüllfläche bildet.

Die Einbuchtungen bilden beispielsweise konkave Formbereiche.

Das Ausbilden einer konvexen Hüllfläche im maximal komprimierten Zustand bietet beispielsweise den Vorteil, dass die Vakuummembran während des Aufbringens des Vakuums zu keinem Zeitpunkt in Bezug auf die darunter liegende Druckvermittlungseinrichtung wieder gedehnt wird, bzw. sozusagen abgespannt wird, wie dies der Fall wäre, wenn die Vakuummembran zunächst eine konvexe Hüllfläche bildet, und im weiteren Umformen eine Hüllfläche mit konkaven Bereichen bilden würde.

Gemäß einem Ausführungsbeispiel weist die Druckvermittlungseinrichtung ein austauschbares Druckvermittlungselement auf.

Gemäß einem weiteren Ausführungsbeispiel weist die Druckvermittlungseinrichtung eine Vielzahl von Druckvermittlungselementen auf, die beispielsweise auch austauschbar ausgebildet sein können.

Beispielsweise sind mehrere Druckvermittlungselemente nebeneinander, hintereinander und/oder übereinander (in Richtung des aufgebrachten Drucks) vorgesehen.

Es können auch mehrere Druckvermittlungselemente zu einer Druckvermittlungseinrichtung zusammengefasst sein.

Beispielsweise kann auch eine Druckvermittlungseinrichtung, bzw. ein Druckvermittlungselement mit mehreren Kammern ausgebildet sein, z.B. durch eingefügte Zwischenschotts, die das Fließen, bzw. Bewegen der Füllung von einer zur nächsten Kammer zumindest etwas reduzieren, bzw. auch vollständig unterbinden.

Gemäß einer weiteren Ausführungsform ist vorgesehen, dass die Druckvermittlungseinrichtung temperierbar ist, und dass mit der Druckvermittlungseinrichtung einem zu formenden Halbzeug thermische Energie zugeführt werden kann, und/oder auch von diesem abgeführt werden kann.

Gemäß einem weiteren Ausführungsbeispiel ist die Auflageoberfläche austauschbar und verschiedene Oberflächenprofile sind einsetzbar.

Gemäß der Erfindung ist auch ein Verfahren zur Herstellung eines profilierten Bauteils vorgesehen, das die folgenden Schritte aufweist:
a) Anordnen eines zu formenden Halbzeugs auf einer Auflageoberfläche einer Auflegeeinrichtung;
b) Anordnen einer Druckvermittlungseinrichtung auf dem Halbzeug, die eine biegeweiche Hülle zum Anliegen an dem Halbzeug in einem nicht verformten ersten Zustand und zum Anliegen in einem umgeformten zweiten Zustand aufweist;
c) Anordnen einer Andrückeinrichtung auf der Druckvermittlungseinrichtung, wobei die Andrückeinrichtung eine biegeweiche Fläche aufweist, die an der Druckvermittlungseinrichtung anliegt, wobei mit der biegeweichen Fläche die Kraft für die Umformung auf die Druckvermittlungseinrichtung übertragen wird;
d) Andrücken des zu formenden Halbzeugs an die Auflageoberfläche mittels der Andrückeinrichtung über die Druckvermittlungseinrichtung und gleichzeitiges Umformen,
dadurch gekennzeichnet, dass die Druckvermittlungseinrichtung ferner eine druckübertragende und verformbare Füllung aufweist und die biegeweiche Hülle zum Halten eines in der Druckvermittlungseinrichtung eingeschlossenen Volumens der Füllung ausgebildet ist.

Gemäß einer beispielhaften Ausführungsform des Verfahrens liegt die biegeweiche Fläche der Andrückeinrichtung auf der einen Seite an der Druckvermittlungseinrichtung an und wird auf der anderen Seite mit einem Fluid mit Druck beaufschlagt zur Kraftübertragung für die Umformung. Außerdem ist für die Druckbeaufschlagung vorgesehen, dass:
i) die biegeweiche Fläche ein mit Druck beaufschlagbares Volumen bildet; oder
ii) die biegeweiche Fläche eine Vakuummembran ist, wobei in Schritt d) ein Unterdruck in einem Bereich zwischen der Vakuummembran und der Auflageoberfläche durch eine Vakuumeinrichtung erzeugt wird, so dass ein von außen auf die Vakuummembran einwirkender Luftdruck über die Druckvermittlungseinrichtung wirkt und ein Umformen durch Anlegen des Halbzeugs an die Auflageoberfläche bewirkt.

Gemäß einer beispielhaften Ausführungsform wird die biegeweiche Fläche der Andrückeinrichtung derart an Haltepunkten gehalten, dass die biegeweiche Fläche sowohl im nicht verformten ersten Zustand als auch im umgeformten zweiten Zustand eine konvexe Kontur bildet, und die biegeweiche Fläche zur Kraftübertragung für die Umformung mit einer Zugspannung beaufschlagt wird.

Beispielsweise wird die biegeweiche Fläche, die z.B. als Folie ausgebildet ist, an einem ersten Seitenrand an einer Basisfläche gehalten, auf der die Auflageoberfläche der Auflegeeinrichtung angeordnet ist. Die Folie wird nun über das zu verformende Halbzeug gelegt und an einem zweiten Seitenrand wird eine Zugspannung aufgebracht, so dass die Folie eine Druckkraft auf die Druckvermittlungseinrichtung ausübt, die schließlich auf das Halbzeug wirkt.

Gemäß einem weiteren Ausführungsbeispiel wird vor Schritt d) das Halbzeug zum Erweichen mittels der Druckvermittlungseinrichtung temperiert.

Gemäß der vorliegenden Erfindung ist auch die Verwendung der oberhalb beschriebenen Vorrichtung bei der Herstellung eines profilierten Bauteils vorgesehen.

Gemäß der Erfindung wird für die Umformung eines Halbzeugs ein flexibles Element eingesetzt, das aufgrund der Fähigkeit sich anzuschmiegen ein besseres Verformen des Halbzeugs durch ein besseres Andrücken des Halbzeugs insbesondere an Innenradien bewirkt. Die druckübertragende und verformbare Füllung kann dabei beispielsweise auch als Wärmeträger dienen, um beispielsweise ein als Laminat vorgesehenes Halbzeug aufzuheizen und damit auch aufzuweichen, um den Umformvorgang zu unterstützen. Durch Verwendung eines höher-viskosen Mediums, wie z.B. ein Gel, kann der druckübertragende Zwischenkörper auch in Bereichen eingesetzt werden, bei denen es, beispielsweise aufgrund der Schwerkraft, zu einem ungünstigen Abfließen, bzw. Abwandern der Füllung kommen könnte. Gegenüber beispielsweise einem starren Druckstempelwerkzeug lässt sich mittels des erfindungsgemäß vorgesehenen verformbaren Elements ein guter Umformgrad bei der Umformung des Halbzeugs auch bei leicht abweichenden Formen erreichen, insbesondere bei variierenden Innenradien oder Innenkanten bzw. Innenecken. Durch die Flexibilität des Druckelements ist die Umformvorrichtung im Gegensatz zu starren Umformstempeln zudem ohne Rüstaufwand für verschiedene Unterformen einsetzbar. Das flexible Zwischenelement bewirkt ein verbessertes Andrücken an die darunter befindliche Formstruktur.

Es sei darauf hingewiesen, dass die Merkmale der Ausführungsbeispiele der Vorrichtungen auch für Ausführungsformen des Verfahrens sowie auch die Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: ein Ausführungsbeispiel einer Umformvorrichtung zur Herstellung eines profilierten Bauteils gemäß der vorliegenden Erfindung;
- **Fig. 2**: ein weiteres Ausführungsbeispiel für eine Umformvorrichtung gemäß der vorliegenden Erfindung;
- **Fig. 3a+b**: ein weiteres Ausführungsbeispiel für eine Umformvorrichtung gemäß der vorliegenden Erfindung in zwei Zuständen während des Umformvorgangs;
- **Fig. 4**: ein weiteres Ausführungsbeispiel für eine Umformvorrichtung gemäß der vorliegenden Erfindung;
- **Fig. 5a+b**: zeigen weitere Ausführungsbeispiele einer Druckvermittlungseinrichtung gemäß der Erfindung;
- **Fig. 6**: Schritte eines Verfahrens zur Herstellung eines profilierten Bauteils gemäß einem Ausführungsbeispiel der Erfindung;
- **Fig. 7 - 9**: schematische Darstellungen von Zuständen während eines Ausführungsbeispiels eines Verfahrens gemäß der vorliegenden Erfindung;
- **Fig. 10**: ein weiteres Beispiel einer Umformvorrichtung während des Umformens;
- **Fig. 11**: das Beispiel aus Fig. 10 nach erfolgtem Umformen;
- **Fig. 12**: ein weiteres Beispiel einer Umformvorrichtung; und
- **Fig. 13**: ein noch weiteres Beispiel einer Umformvorrichtung.

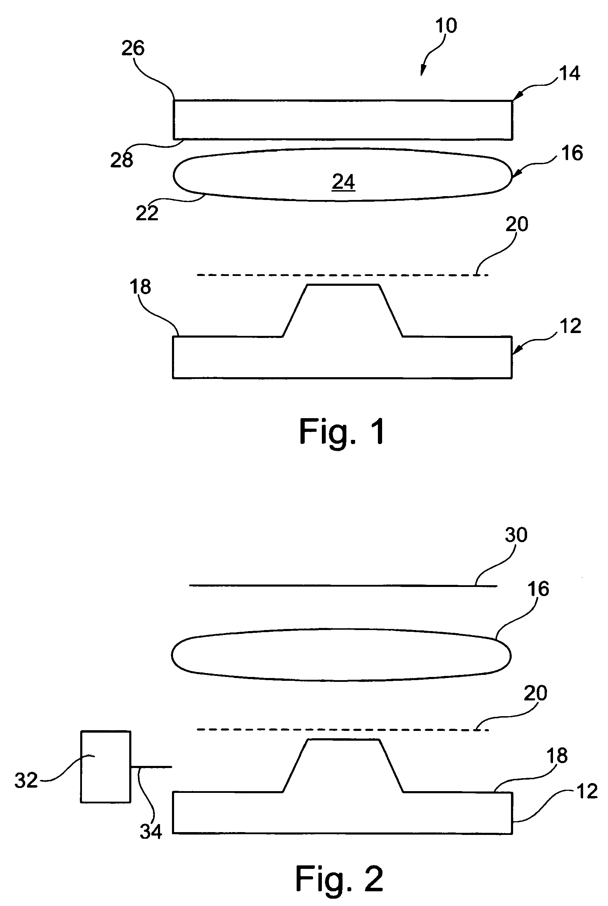

Fig. 1 zeigt eine Umformvorrichtung 10 zur Herstellung eines profilierten Bauteils. Dazu sind eine Auflegeeinrichtung 12, eine Andrückeinrichtung 14 und eine Druckvermittlungseinrichtung 16 gezeigt. Die Auflegeeinrichtung weist eine Auflageoberfläche 18 zum Auflegen eines zu formenden Halbzeugs auf, das mit einer gestrichelten Linie 20 angedeutet ist.

Die Andrückeinrichtung 14 ist vorgesehen, um ein zu formendes Halbzeug an die Auflageoberfläche 18 anzudrücken.

Die Druckvermittlungseinrichtung 16 weist zumindest auf der dem Halbzeug zugewandten Seite eine biegeweiche Hülle 22 und eine druckübertragende und verformbare Füllung 24 auf. Die Druckvermittlungseinrichtung 16 ist außerdem zwischen der Andrückeinrichtung 14 und einem zu formenden Halbzeug anordenbar.

Beispielsweise kann die Druckvermittlungseinrichtung 16 umlaufend mit der biegeweichen Hülle 22 ausgebildet sein und eine mit einem Fluid gefüllte Blase bilden.

Es sei darauf hingewiesen, dass die Umformvorrichtung 10 lediglich schematisch dargestellt ist, und dass insbesondere die Andrückeinrichtung 14, die Druckvermittlungseinrichtung 16 und die Auflegeeinrichtung 12 auch andere Formen, bzw. Profile aufweisen können, wie auch weiter unterhalb dargestellt.

Die Andrückeinrichtung 14 weist eine biegeweiche Fläche 26 auf, die an der Druckvermittlungseinrichtung anliegt, wobei die biegeweiche Fläche die Kraft für die Umformung auf die Druckvermittlungseinrichtung überträgt.

Beispielsweise liegt die biegeweiche Fläche 26 der Andrückeinrichtung 14 auf der einen Seite an der Druckvermittlungseinrichtung 16 an und kann auf der anderen Seite mit einem Fluid mit Druck beaufschlagt werden zur Kraftübertragung für die Umformung. Für die Druckbeaufschlagung kann die biegeweiche Fläche ein mit Druck beaufschlagbares Volumen bilden (siehe auch FI. 10 ff.).

Das mit Druck beaufschlagbare Volumen kann z.B. mit einem Fluid wie (Druck-) Luft, Öl oder Wasser gefüllt sein.

In Fig. 2 ist eine Ausführungsform gezeigt, bei der die biegeweiche Fläche der Andrückeinrichtung 14 eine Vakuummembran 30 ist. Außerdem ist eine Vakuumeinrichtung 32, beispielsweise eine Vakuumpumpe, zur Erzeugung eines Unterdrucks vorgesehen in einem Bereich zwischen der Vakuummembran und der Auflageoberfläche derart, dass ein von außen auf die Vakuummembran einwirkender Luftdruck ein Umformen durch Anlegen des Halbzeugs an die Auflageoberfläche bewirkt. In Fig. 2 ist schematisch eine Verbindung 34 der Vakuumeinrichtung 32 mit dem Bereich zwischen der Vakuummembran 30 und der Auflageoberfläche 18 dargestellt. Es sei darauf hingewiesen, dass etwaige Anschlüsse und Abdichtungen der Vakuummembran 30 in Bezug auf die Auflageoberfläche 18 in Fig. 2 nicht dargestellt sind, wie dies für das Erzeugen eines Vakuums in dem Zwischenbereich notwendig ist.

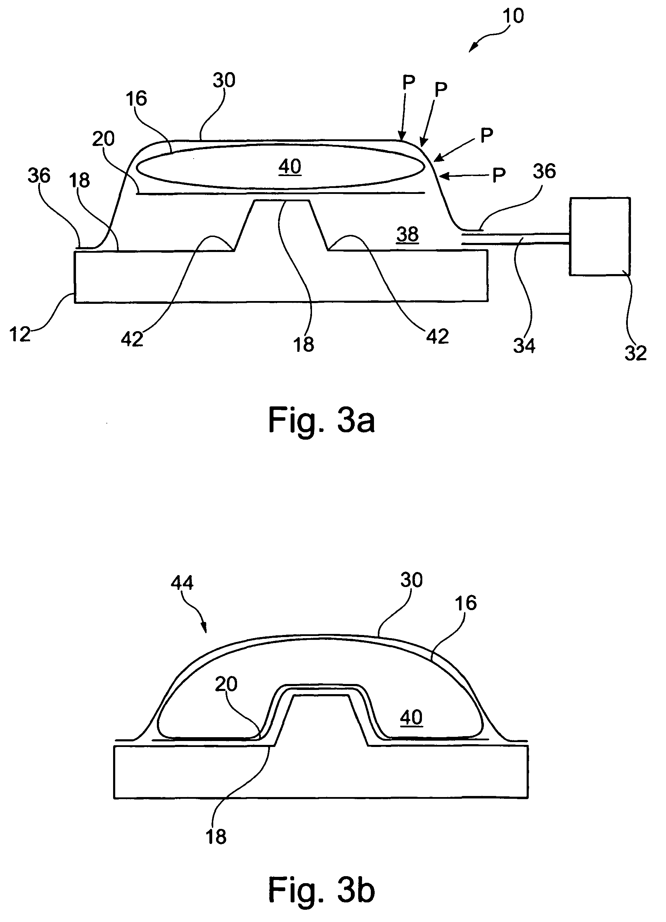

In Fig. 3A ist die Vorrichtung 10 in einem Zustand gezeigt, bei dem das Halbzeug 20, hier dargestellt mit einer durchgehenden Linie, auf die Auflageoberfläche 18 der Auflegeeinrichtung 12 aufgelegt ist, und außerdem die Druckvermittlungseinrichtung 16 bereits an dem Halbzeug 20 anliegt. Außerdem ist die Vakuummembran 30 über der Druckvermittlungseinrichtung 16 derart positioniert, dass die Membran 30 in seitlichen Randbereichen 36 mit der Auflegeeinrichtung 12 verbunden ist. An dem rechten Randbereich 36 ist der Anschluss 34 der Vakuumeinrichtung 32 schematisch angedeutet. Außerdem ist durch die Buchstaben P sowie dazugehörige Pfeile angedeutet, wie ein Luftdruck auf die Vakuummembran 30 einwirkt, wobei dieser im Anfangszustand jedoch keinerlei Auswirkung hat, da in dem Bereich, den die Vakuummembran 30 einschließt, mit einem Bezugszeichen 38 gekennzeichnet, ebenfalls der gleiche Luftdruck herrscht. Erst durch Anlegen eines Unterdrucks durch die Vakuumeinrichtung 32 kommt es zu einem Auswirken des Luftdrucks P.

Fig. 3B zeigt einen Zustand, bei dem das Halbzeug 20 vollständig umgeformt ist und an der Auflageoberfläche 18 anliegt. Dies wurde dadurch erreicht, dass die Membran 30 auf die Druckvermittlungseinrichtung 16 einwirkt, und die Druckvermittlungseinrichtung 16 wiederum auf das Halbzeug 20 einwirkt.

Wie ebenfalls in Fig. 3B dargestellt, weist die Druckvermittlungseinrichtung beispielsweise ein derartiges Volumen 40 auf, dass bei Anliegen der Druckvermittlungseinrichtung an der Auflageoberfläche 18, bzw. an dem vollständig anliegenden Halbzeug 20, sämtliche Einbuchtungen der Auflageoberfläche, die in Fig. 3A mit Bezugszeichen 42 gekennzeichnet sind, durch die Druckvermittlungseinrichtung 16 aufgefüllt sind, so dass die Vakuummembran eine konvexe Hüllfläche 44 bildet.

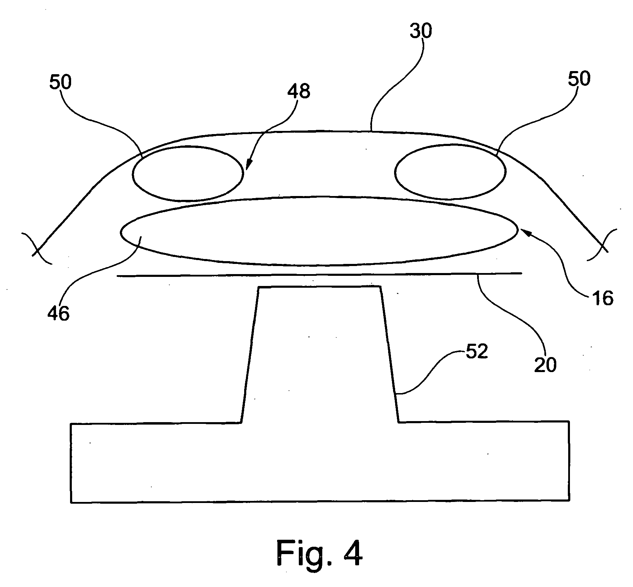

Die Druckvermittlungseinrichtung 16 weist beispielsweise ein austauschbares Druckvermittlungselement 46 auf, wie dies in Fig. 4 angedeutet ist.

Außerdem kann auch eine Vielzahl 48 von Druckvermittlungselementen 50 vorgesehen sein. Dies ist ebenfalls in Fig. 4 angedeutet, wobei jedoch darauf hingewiesen wird, dass die Austauschbarkeit des Druckvermittlungselements 46 und das Vorhandensein der Vielzahl 48 zwar in Kombination gezeigt sind, nicht jedoch zwangsläufig in dieser Kombination vorliegen müssen. Mit anderen Worten, diese beiden Merkmale können auch unabhängig voneinander vorgesehen sein, und mit anderen, in anderen Figuren dargestellten Merkmalen kombiniert werden.

Beispielsweise können, wie in Fig. 4 gezeigt, mehrere Druckvermittlungselemente in Richtung des aufgebrachten Drucks übereinander vorgesehen sein. Daneben ist es auch möglich, mehrere Druckvermittlungselemente nebeneinander oder hintereinander vorzusehen, was jedoch nicht näher dargestellt ist.

Beispielsweise können ein größeres Druckvermittlungselement, beispielsweise das Druckvermittlungselement 46 aus Fig. 4, mit zwei kleineren Druckvermittlungselementen, beispielsweise die beiden Druckvermittlungselemente 50 in Fig. 4, miteinander kombiniert werden, um bei einer starken Profilierung der Auflageoberfläche 18, beispielsweise in Form eines sehr weit vorspringenden mittleren Bereichs 52, dennoch ein entsprechendes Umformen bzw. Anliegen des Halbzeugs 20 zu bewirken.

An dieser Stelle sei explizit darauf hingewiesen, dass in den Figuren die Auflageoberfläche 18 mit einem mittleren hervorragenden Bereich ausgebildet ist, beispielsweise zur Herstellung eines Profils mit einem sogenannten Hut-Querschnitt; darüber hinaus können jedoch selbstverständlich auch andere Profilierungen der Auflageoberfläche 18 vorgenommen werden, was jedoch nicht näher dargestellt ist. Die Tatsache, dass in den Figuren stets auf eine ähnliche Profilierung der Auflageoberfläche 18 Bezug genommen wird, dient lediglich der vereinfachten Erläuterung, und bedeutet keinesfalls, dass es sich dabei um ein zentrales Merkmal der vorliegenden Erfindung handelt. Vielmehr können die Profile der Auflageoberfläche 18 frei gewählt werden.

Insbesondere können gemäß der vorliegenden Erfindung auch Profilierungen mit einem Hinterschnitt, zumindest in gewissem Maße, vorgesehen sein, da es aufgrund der flexiblen Druckvermittlungseinrichtung auch bei derartigen Formen zu einem sauberen Umformen durch ein überall gleichförmiges Anliegen des Halbzeugs an der Auflageoberfläche 18 kommt (jedoch nicht näher dargestellt).

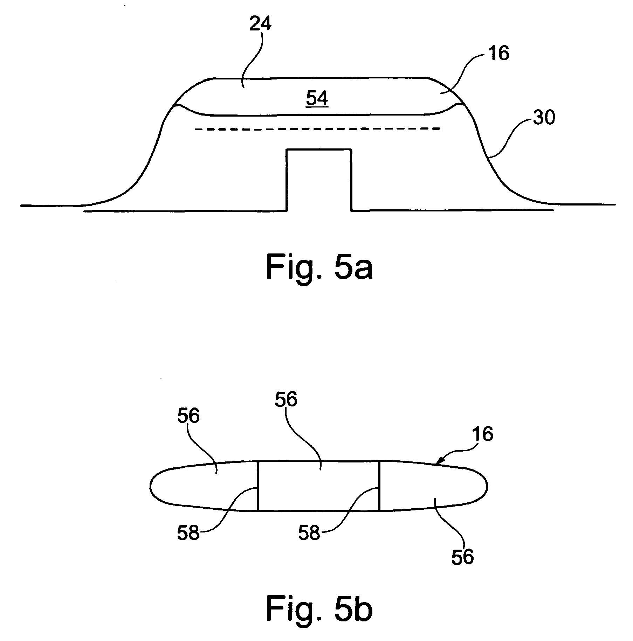

In Fig. 5A ist ein weiteres Ausführungsbeispiel gezeigt, bei dem die Druckvermittlungseinrichtung 16 in der Vakuummembran 30 integriert ausgebildet ist, beispielsweise als mit der druckübertragenden und verformbaren Füllung versehender Hohlraum 54, der durch eine doppelwandige Konstruktion der Vakuummembran 30 erreicht wird.

Gemäß einem weiteren Ausführungsbeispiel ist die Druckvermittlungseinrichtung 16 mit mehreren Kammern 56 ausgebildet, die durch eine Abschottung 58 voneinander getrennt sind. Die Abschottung 58 kann beispielsweise verhindern, dass die Füllung 24 aus dem einen Segment, bzw. der einen Kammer 56 in die benachbarte Kammer 56 gelangt, bzw. zumindest nur reduziert, bzw. abgebremst in die benachbarte Kammer gelangen kann. Dadurch lässt sich beispielsweise verhindern, dass es bei stark profilierten Auflageoberflächen zu einem Abfließen, bzw. Absacken der Füllung 24 in der Druckvermittlungseinrichtung 16 kommt, bevor über die Andrückeinrichtung 14 der Druck auf das Halbzeug einwirken kann zur Umformung.

Die Füllung 24 der Druckvermittlungseinrichtung 16 weist beispielsweise ein Fluid, eine Flüssigkeit, ein Gel und/oder eine lose Festkörperschüttung auf.

Die Verwendung einer Flüssigkeit stellt eine druckstabile Füllung zur Verfügung.

Beispielsweise kann die Füllung eine hochviskose Füllung sein, um ein Fließen der Füllung 24 in der Druckvermittlungseinrichtung 16 zumindest etwas zu reduzieren.

Beispielsweise weist die Füllung eine dynamische Viskosität von mindestens 100 Pa·s auf.

Beispielsweise kann die Füllung kleine Kügelchen aufweisen, die zu einer Schüttung in der Druckvermittlungseinrichtung vorgesehen sind, wobei die Kügelchen druckfest sind.

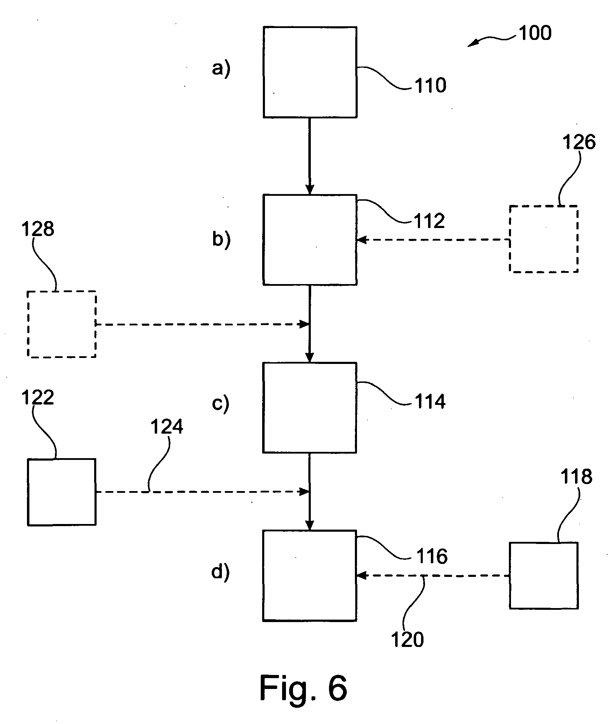

Im Folgenden soll zunächst auf Schritte eines Verfahrens 100 zur Herstellung eines profilierten Bauteils anhand von Fig. 6 eingegangen werden. In einem ersten Anordnungsschritt 110 wird ein zu formendes Halbzeug auf einer Auflageoberfläche einer Auflegeeinrichtung angeordnet. Anschließend erfolgt in einem zweiten Anordnungsschritt 112 ein Anordnen einer Druckvermittlungseinrichtung, die zumindest auf der dem Halbzeug zugewandten Seite eine biegeweiche Hülle und eine druckübertragende und verformbare Füllung aufweist, wobei die Anordnung auf Halbzeug erfolgt. In einem dritten Anordnungsschritt 114 wird eine Andrückeinrichtung auf der Druckvermittlungseinrichtung angeordnet, wobei die Andrückeinrichtung eine biegeweiche Fläche aufweist, die an der Druckvermittlungseinrichtung anliegt, wobei mit der biegeweichen Fläche die Kraft für die Umformung auf die Druckvermittlungseinrichtung übertragen wird. Anschließend erfolgt in einem Andrückvorgang 116 ein Andrücken des zu formenden Halbzeugs an die Auflageoberfläche mittels der Andrückeinrichtung über die Druckvermittlungseinrichtung, wobei das Halbzeug entsprechend der durch das Profil der Auflageoberfläche vorgegebenen Profilierung umgeformt wird.

Der erste Anordnungsschritt 110 wird auch als Schritt a), der zweite Anordnungsschritt 112 als Schritt b), der dritte Anordnungsschritt 114 als Schritt c) und der Andrückvorgang 116 als Schritt d) bezeichnet.

Gemäß einem (im Detail nicht weiter gezeigten) Ausführungsbeispiel liegt die biegeweiche Fläche der Andrückeinrichtung auf der einen Seite an der Druckvermittlungseinrichtung an und wird auf der anderen Seite mit einem Fluid mit Druck beaufschlagt zur Kraftübertragung für die Umformung. Für die Druckbeaufschlagung bildet die biegeweiche Fläche z.B. ein Volumen, das mit einem Fluid gefüllt sein kann, z.B. mit ein Druckluft beaufschlagtes Volumen (siehe auch weiter unten). In einem weiteren Beispiel ist die biegeweiche Fläche eine Vakuummembran 30. In Schritt d) wird ein Unterdruck in einem Bereich zwischen der Vakuummembran und der Auflageoberfläche durch eine Vakuumeinrichtung erzeugt, so dass ein von außen auf die Vakuummembran einwirkender Luftdruck über die Druckvermittlungseinrichtung wirkt und ein Umformen durch Anlegen des Halbzeugs an die Auflageoberfläche bewirkt wird. Das Erzeugen eines Unterdrucks ist in Fig. 6 mit einem zusätzlichen Rahmen 118 angedeutet, wobei jedoch explizit darauf hingewiesen wird, dass dieser Schritt 118 eine mögliche Option zu den Schritten a) bis d) darstellt, was auch durch eine gestrichelte Verbindungslinie 120 des Rahmens 118 mit dem Andrückvorgang 116 angedeutet ist.

Gemäß einem weiteren Beispiel des Verfahrens wird die biegeweiche Fläche der Andrückeinrichtung derart an Haltepunkten gehalten, dass die biegeweiche Fläche sowohl im nicht verformten ersten Zustand als auch im umgeformten zweiten Zustand eine konvexe Kontur bildet, und die biegeweiche Fläche wird zur Kraftübertragung für die Umformung mit einer Zugspannung beaufschlagt.

Als weitere Option kann beispielsweise vorgesehen sein, dass vor Schritt d) das Halbzeug zum Erweichen mittels der Druckvermittlungseinrichtung temperiert wird, was in Fig. 6 beispielhaft mit einem weiteren Rahmen 122 angedeutet ist, der mittels eines weiteren gestrichelten Verbindungspfeils 124 mit den Schritten a) bis d) verbunden ist, wobei durch die Lage des Verbindungspfeils 124 angedeutet ist, dass dieser Temperiervorgang vor Schritt d) erfolgt, wobei jedoch darauf hingewiesen wird, dass das Temperieren auch im Zusammenhang mit Schritt b), angedeutet durch einen weiteren Rahmen 126 mit entsprechender gestrichelter Verbindungslinie, oder auch im Anschluss an Schritt d) (siehe weiterer Rahmen 128) vorgesehen sein kann. Da das Temperieren des Halbzeugs mittels der Druckvermittlungseinrichtung 16 erfolgt, findet der Temperiervorgang jedenfalls ab dem Anordnen in Schritt 112 bis unmittelbar vor dem Andrückvorgang, bzw. in gewissen Maß auch während des Andrückvorgangs 116 statt.

Es sei jedoch darauf hingewiesen, dass der Temperiervorgang 122 zwar in Kombination mit den Merkmalen aus den Schritten a) bis d), sowie auch in Kombination dem Erzeugen eines Vakuums dargestellt ist, jedoch die anderen Merkmale auch ohne das Temperieren vorgesehen sein können. Ebenso kann das Temperieren auch ohne das Erzeugen des Vakuums vorgesehen sein, beispielsweise wenn die Andrückeinrichtung eine Folie ist, die zum Umformen über das Halbzeug gespannt wird, oder bei einem mit Druckluft, oder einem anderen Medium, beaufschlagbaren Druckkissen, das gegen die Druckvermittlungseinreichung drückt.

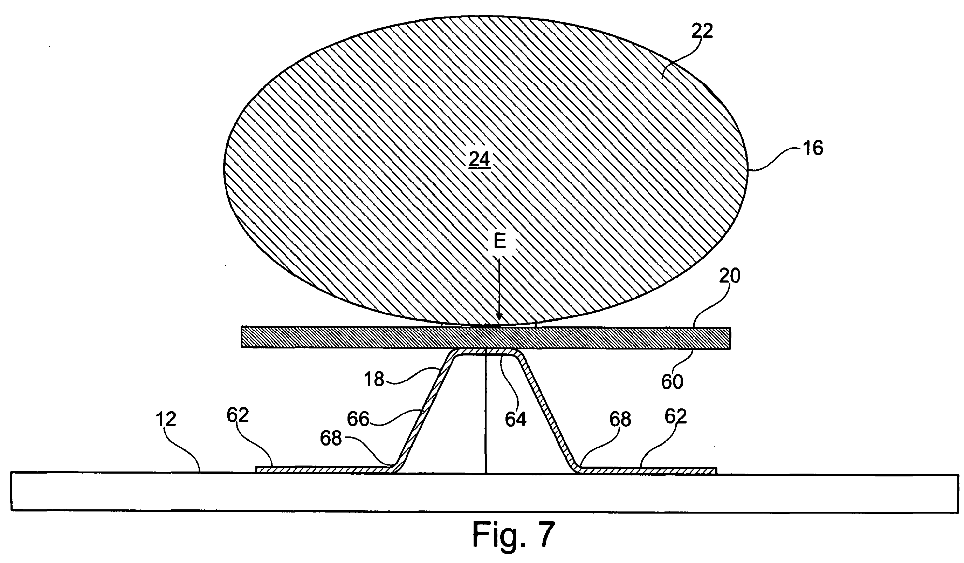

Fig. 7 zeigt schematisch einen Zustand eines Ausführungsbeispiels, bei dem das zu formende Halbzeug, bei dem es sich beispielsweise um einen faserverstärkten Verbundwerkstoff 60 handelt, auf der Auflageoberfläche 18 der Auflegeeinrichtung 12 aufgelegt ist. Als Auflageoberfläche 18 kann beispielsweise ein Profilsegment vorgesehen sein, das ein Formgegenstück bildet für die Umformung des zu formenden Halbzeugs 20. Wie in Fig. 7 gezeigt, weist das Profil, bzw. die Auflageoberfläche 18 zwei seitliche, flache Bereiche 62 sowie einen mittleren erhöhten, flachen Bereich 64 auf, wobei jeweils ein schräger Übergangsbereich 66 zwischen den flachen, seitlichen Bereichen 62 und dem mittleren, erhöhten, flachen Bereich 64 ausgebildet ist. Diese Profilform weist demnach innenliegende Kantenbereiche 68 auf, die auch als konkave Formbereiche bezeichnet werden können.

Oberhalb des Halbzeugs 20 ist durch eine elliptische Form die Druckvermittlungseinrichtung 16 mit der biegeweichen Hülle 22 und der druckübertragenden und verformbaren Füllung 24 angedeutet. Aufgrund der biegeweichen Hülle 22 kommt es, z.B. aufgrund der Schwerkraft, dann zu einem Anliegen der Hülle 22 an dem Halbzeug 20, so dass bereits ein Erwärmen des Halbzeugs möglich ist, wenn beispielsweise die Druckvermittlungseinrichtung temperiert worden ist, um so thermische Energie, angedeutet mit einem Pfeil 70 und dem Buchstaben E, zuzuführen, bzw. auch abzuführen, beispielsweise um mittels einer vorgekühlten Druckvermittlungseinrichtung 16 das Halbzeug 20 zu kühlen, beispielsweise um einen bestimmten Steifheitsgrad des Halbzeugs 20 zu erreichen.

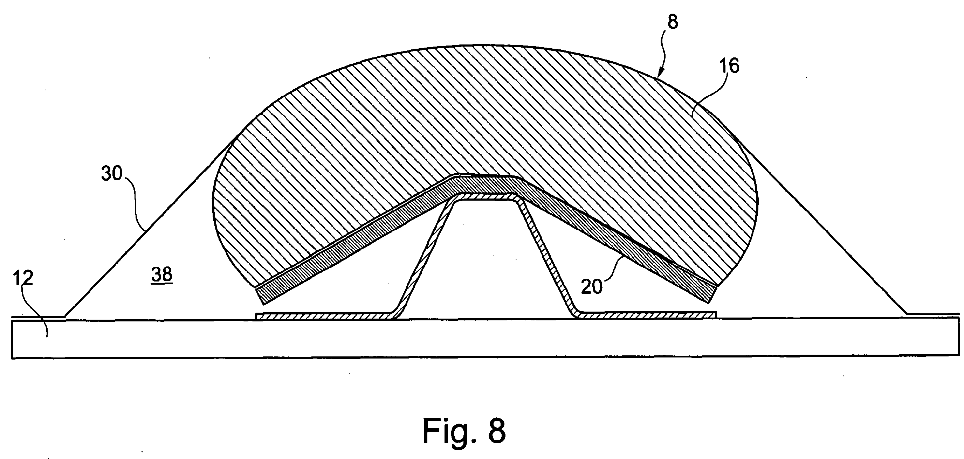

Anschließend wird beispielsweise die Vakuummembran 30 über die Druckvermittlungseinrichtung 16 gelegt und mit der Auflegeeinrichtung 12, bzw. der Auflageoberfläche 18 oder deren Fortsetzung verbunden, wie dies in Fig. 8 schematisch dargestellt ist. In Fig. 8 ist das Halbzeug 20 bereits teilweise verformt, indem es seitlich sozusagen heruntergeklappt dargestellt ist. Mit anderen Worten, der in Fig. 8 gezeigte Zustand deutet bereits an, dass in dem Bereich 38 zwischen der Membran 30 und der Auflegeeinrichtung 12 ein Unterdruck derart erzeugt wurde, dass der von außen wirkende Luftdruck, schematisch lediglich mit einem Pfeil P angedeutet, bewirkt, dass das Halbzeug verformt wird.

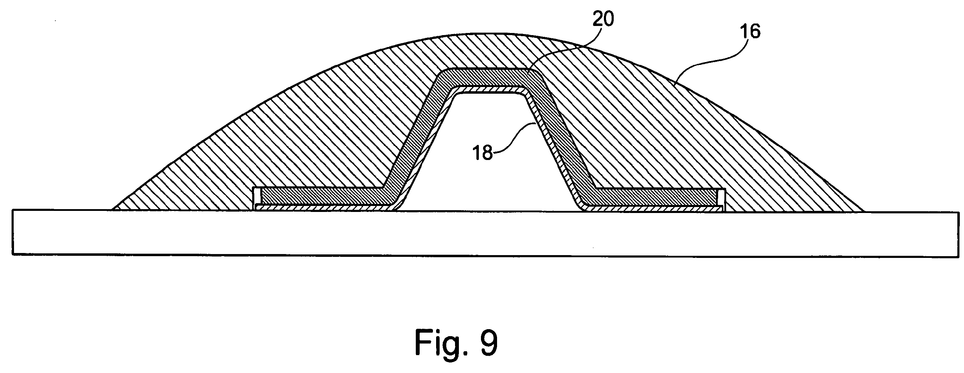

Wenn nun weiter Unterdruck erzeugt wird, schmiegt sich die Druckvermittlungseinrichtung 16 an das Halbzeug 20 vollständig an und bewirkt ein Anlegen des Halbzeugs 20 an der Auflageoberfläche 18, so dass das Halbzeug 20, wie in Fig. 9 gezeigt, vollständig umgeformt ist. Insbesondere erfolgt dabei ein gleichmäßiges Andrücken des Halbzeugs 20 an den Innenradien der Einbuchtungen 68.

Es sei darauf hingewiesen, dass die Darstellung der Figuren 7 bis 9 schematisch erfolgt, und insbesondere die Form der Druckvermittlungseinrichtung 16 auch davon abweichen kann, insbesondere im Zusammenhang mit Fig. 9, wo die Druckvermittlungseinrichtung 16 bis in die seitlichen Zwickelbereiche verläuft.- Hier kann selbstverständlich auch ein anderer Übergang von der Vakuummembran, die an der Auflegeeinrichtung 12 anliegt und anschließend das Druckvermittlungselemente bzw. die Druckvermittlungseinrichtung 16 überdeckt, vorgesehen sein, bzw. sich herausbilden.

Nachdem das Halbzeug 20 vollständig umgeformt ist, kann mittels der temperierbaren Druckvermittlungseinrichtung 16 auch ein Abkühlen vorgesehen sein, beispielsweise mittels in die Druckvermittlungseinrichtung 16 eingebrachten Kühl- bzw. Heizelementen, die das Halbzeug kühlen, um somit dafür zu sorgen, dass das Halbzeug seine Kontur behält.

Damit lassen sich beispielsweise Halbzeuge umformen, die bei Raumtemperatur, bzw. bei normaler Verarbeitungstemperatur formstabil sind, und lediglich für das Umformen durch die Druckvermittlungseinrichtung 16 derart erwärmt, bzw. erweicht werden, dass das Umformen erfolgen kann. Durch ein anschließendes Abkühlen wird dann ein umgeformtes Halbzeug zur Verfügung gestellt, das weiteren Arbeitsschritten zugeführt werden kann, beispielsweise einen weiteren Verarbeitungsschritt, z.B. einem Aushärtevorgang.

Bei dem zu formenden Halbzeug 20 kann es sich insbesondere um ein Kompositlaminat handeln.

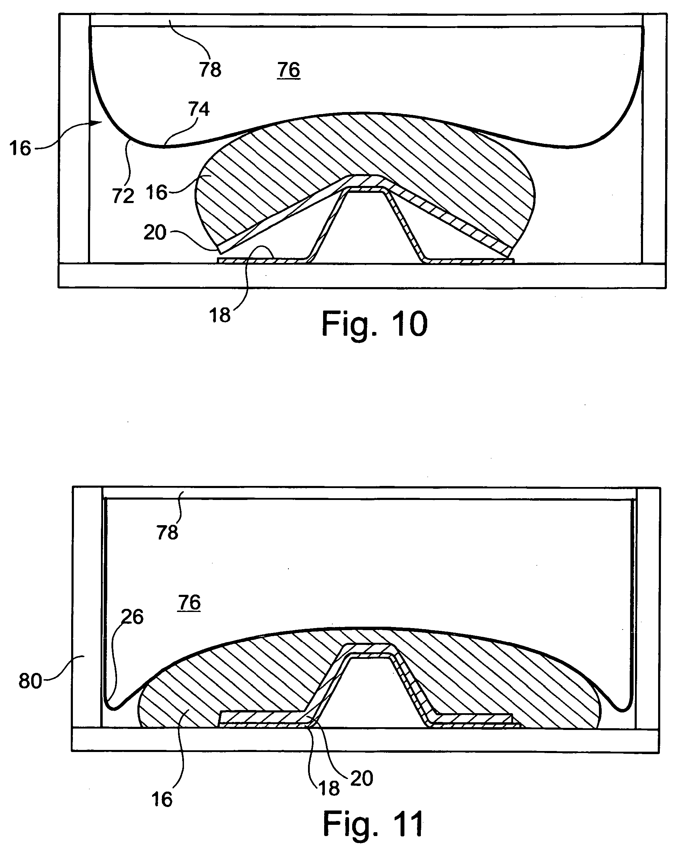

Fig. 10 zeigt ein weiteres Beispiel, bei dem die biegeweiche Fläche 26 der Andrückeinrichtung auf der einen Seite an der Druckvermittlungseinrichtung 16 anliegt und auf der anderen Seite mit einem Fluid mit Druck beaufschlagbar ist zur Kraftübertragung für die Umformung. Die an der Druckvermittlungseinrichtung 16 anliegende Seite ist mit Bezugszeichen 72 gekennzeichnet und die andere Seite mit Bezugszeichen 74. Für die Druckbeaufschlagung bildet die biegeweiche Fläche 26 ein mit Druck beaufschlagbares Volumen 76. Beispielsweise ist die biegeweiche Fläche 26 eine Folie, die an einer Halterung 78 abdichtend befestigt ist, so dass das Volumen 76 mit Druckluft, oder auch einem anderen Medium oder Fluid, z.B. Wasser, beaufschlagt werden kann, um die Druckvermittlungseinrichtung 16 gegen das zu verformende Halbzeug 20 zu drücken.

Beispielsweise ist die Halterung 78 der Folie während des Umformens unbeweglich gehalten und das Volumen 76 wird zunehmend mit Druckluft oder einem anderen Medium gefüllt. In einem anderen Beispiel ist die Halterung 78 der Folie während des Umformens beweglich gehalten und wird in Richtung der Umformbewegung geführt. Das Volumen 76 kann dabei zunehmend mit Druckluft gefüllt werden oder auch einen mehr oder weniger konstanten Druck aufweisen.

Fig. 11 zeigt ein Beispiel, bei dem sich das von der biegeweichen Fläche 26 gebildete Volumen 76 so weit ausgedehnt hat, dass das Halbzeug 20 durch die Druckvermittlungseinrichtung 16 bedingt vollständig an der Auflageoberfläche 18 anliegt. Äußere Begrenzungen 80 können vorgesehen sein, um die Ausdehnung des Volumens 76 in seiner Wirkung auf die Umformung zu fokussieren.

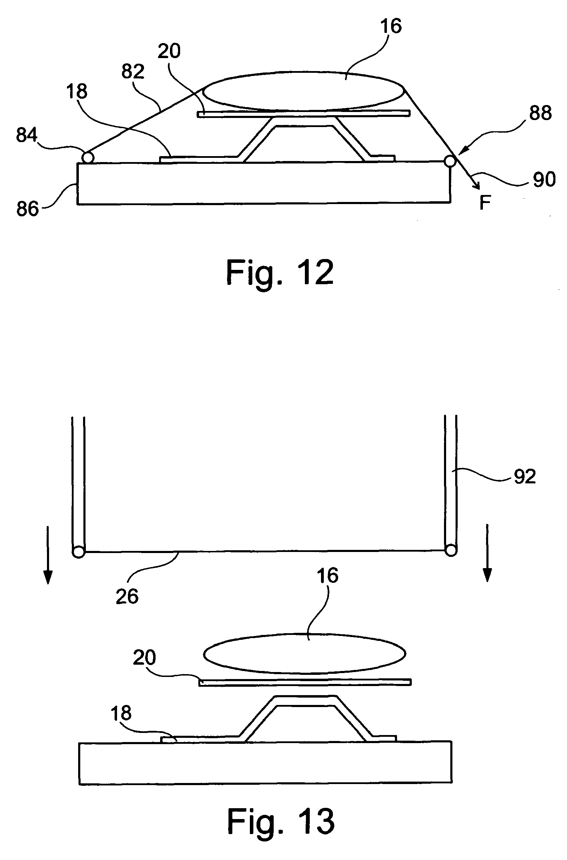

Fig. 12 zeigt ein weiteres Beispiel, bei dem die biegeweiche Fläche, die z.B. als Folie 82 ausgebildet ist, an einem ersten Seitenrand 84 an einer Basisfläche 86 gehalten wird, auf der die Auflageoberfläche 18 der Auflegeeinrichtung angeordnet ist. Die Folie 82 wird nun über das zu verformende Halbzeug 20 gelegt und an einem zweiten Seitenrand 88 wird eine Zugspannung 90 aufgebracht, so dass die Folie 82 eine Druckkraft auf die Druckvermittlungseinrichtung 16 ausübt, die schließlich auf das Halbzeug wirkt. Dieses Beispiel eignet sich insbesondere für längere Bauteile, wenn die Befestigung und auch die Zugspannungseinleitung auf den beiden Längsseiten erfolgen können.

In einem weiteren (nicht gezeigten) Beispiel wird die biegeweiche Fläche, z.B. die Folie 82, an zwei Seiten, z.B. an den beiden Seiten oder auch an den umlaufenden Rändern, mit einer Zugkraft beaufschlagt, um die auf die Druckvermittlungseinrichtung 16 wirkende Druckkraft zu erzeugen.

Fig. 13 zeigt schließlich noch ein Beispiel, bei dem die biegeweiche Fläche, z.B. die Folie 82, an einer Haltestruktur 92, z.B. einem Rahmen an wenigstens zwei gegenüberliegenden Rändern gehalten ist. Die Halterung kann auch an mehr Seiten erfolgen, insbesondere umlaufend. Die Haltestruktur 92 kann auch ein kastenförmiger Halter sein, der ein nach unten offenes Behältnis bildet. Die Öffnung ist z.B. mit der Folie verschlossen. Zum Andrücken der Druckvermittlungseinrichtung 16 wird die Haltestruktur 92 nach unten, bzw. in Richtung des Halbzeugs bewegt. Die Folie kann z.B. elastisch sein und sich an die Druckvermittlungseinrichtung 16 anlegen, so dass zunehmend Druck aufgebracht wird, der schließlich zur Umformung des Halbzeugs führt. Die Folie kann auch nicht elastisch, d.h. zugfest ausgebildet sein, wobei dann die Haltepunkte nachgiebig sein müssen, um einen Längenausglich zu gewährleisten, damit sich die Folie an die (sich während des Umformens verändernde) Kontur Druckvermittlungseinrichtung der 16 anlegen kann. Die Haltearme können beispielsweise nachgiebig sein, oder, mit einer Feder vorgespannt, verschwenkbar, um die Nachgiebigkeit abzubilden.

Mit der erfindungsgemäßen Druckvermittlungseinrichtung 16 lässt sich beispielsweise unter Anwendung einer Vakuummembran ein einfaches und dennoch präzises Umformen des Halbzeugs erreichen, so dass neben dem Zeitgewinn auch eine präzisere Anpassung an die vorgegebene Kontur zur Verfügung gestellt wird. Die Verwendung einer flexiblen Druckvermittlungseinrichtung bietet außerdem den Vorteil, dass es auch bei einer nicht ganz exakten Positionierung der Druckvermittlungseinrichtung auf dem Halbzeug zu einem präzisen Umformen kommt. Bei Vorsehen einer temperierten Druckvermittlungseinrichtung, beispielsweise durch Verwendung eines Gels mit möglichst hoher Wärmespeicherkapazität kann auf zusätzliche Wärmeintragvorrichtungen, beispielsweise zum Eintragen über Strahlung, verzichtet werden, was eine weitere Vereinfachung beim Umformen zur Herstellung eines profilierten Bauteils bedeutet.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer, oben beschriebener Ausführungsbeispiele verwendet werden können. Bezugszeichen in den Ansprüchen sind nicht als Einschränkung anzusehen.

## Patentansprüche

1. Umformvorrichtung (10) zur Herstellung eines profilierten Bauteils, aufweisend:
- eine Auflegeeinrichtung (12);
- eine Andrückeinrichtung (14); und
- eine Druckvermittlungseinrichtung (16);
wobei die Auflegeeinrichtung (12) eine Auflageoberfläche (18) aufweist zum Auflegen eines zu formenden Halbzeugs (20);
wobei die Andrückeinrichtung (14) vorgesehen ist zum Andrücken des zu formenden Halbzeugs (20) an die Auflageoberfläche (18);
wobei die Druckvermittlungseinrichtung (16) eine biegeweiche Hülle (22) zum Anliegen an dem Halbzeug (20) in einem nicht verformten ersten Zustand und zum Anliegen in einem umgeformten zweiten Zustand aufweist;
wobei die Druckvermittlungseinrichtung (16) zwischen der Andrückeinrichtung (14) und dem zu formenden Halbzeug (20) anordenbar ist; und
wobei die Andrückeinrichtung (14) eine biegeweiche Fläche (26) aufweist, die an der Druckvermittlungseinrichtung (16) anliegt; wobei die biegeweiche Fläche (26) die Kraft für die Umformung auf die Druckvermittlungseinrichtung (16) überträgt,
**dadurch gekennzeichnet, dass** die Druckvermittlungseinrichtung (16) ferner eine druckübertragende und verformbare Füllung (24) aufweist und die biegeweiche Hülle (22) zum Halten eines in der Druckvermittlungseinrichtung (16) eingeschlossenen Volumens (40) der Füllung (24) ausgebildet ist.

2. Vorrichtung nach Anspruch 1, wobei das zu formende Halbzeug (20) ein faserverstärkter Verbundwerkstoff (60) ist.

3. Vorrichtung nach Anspruch 1 oder 2, wobei die biegeweiche Fläche (26) der Andrückeinrichtung (14) auf der einen Seite an der Druckvermittlungseinrichtung (16) anliegt und auf der anderen Seite mit einem Fluid mit Druck beaufschlagbar ist zur Kraftübertragung für die Umformung; und
wobei für die Druckbeaufschlagung:
i) die biegeweiche Fläche (26) ein mit Druck beaufschlagbares Volumen (76) bildet; oder
ii) die biegeweiche Fläche (26) eine Vakuummembran (30) ist, wobei eine Vakuumeinrichtung (32) vorgesehen ist zur Erzeugung eines Unterdrucks in einem Bereich zwischen der Vakuummembran (30) und der Auflageoberfläche (18) derart, dass ein von außen auf die Vakuummembran (30) einwirkender Umgebungsluftdruck ein Umformen durch Anlegen des Halbzeugs (20) an die Auflageoberfläche (18) bewirkt.

4. Vorrichtung nach Anspruch 1 oder 2, wobei die biegeweiche Fläche (26) der Andrückeinrichtung (14) derart an Haltepunkten gehalten ist, dass die biegeweiche Fläche (26) sowohl im nicht verformten ersten Zustand als auch im umgeformten zweiten Zustand eine konvexe Kontur bildet, und wobei die biegeweiche Fläche (26) zur Kraftübertragung für die Umformung mit einer Zugspannung beaufschlagbar ist.

5. Vorrichtung nach einem der vorhergehenden Ansprüche, wobei die Druckvermittlungseinrichtung (16) umlaufend mit einer biegeweichen Hülle (22) versehen ist.

6. Vorrichtung nach einem der vorhergehenden Ansprüche, wobei die Druckvermittlungseinrichtung (16) als Füllung (24) aufweist wenigstens eines aus der Gruppe von:
- gasförmigen Fluiden;
- Flüssigkeiten;
- Gelen; und
- losen Festkörperschüttungen.

7. Vorrichtung nach Anspruch 6, wobei die Füllung der Druckvermittlungseinrichtung (16) eine dynamische Viskosität von mindestens 100 Pa·s aufweist.

8. Vorrichtung nach Anspruch 3, wobei das Volumen (40) der Druckvermittlungseinrichtung (16) derart ausgebildet ist, dass bei Anliegen der Druckvermittlungseinrichtung (16) an der Auflageoberfläche (18) sämtliche Einbuchtungen (42) der Auflageoberfläche (18) durch die Druckvermittlungseinrichtung (16) aufgefüllt sind, so dass die Vakuummembran (30) eine konvexe Hüllfläche (44) bildet.

9. Vorrichtung nach einem der vorhergehenden Ansprüche, wobei die Druckvermittlungseinrichtung (16) ein austauschbares Druckvermittlungselement (46) aufweist; und/oder eine Vielzahl (48) von Druckvermittlungselementen (50) aufweist.

10. Vorrichtung nach einem der vorhergehenden Ansprüche, wobei die Druckvermittlungseinrichtung (16) temperierbar ist; und wobei mit der Druckvermittlungseinrichtung (16) einem zu formenden Halbzeug (20) thermische Energie (70) zu- und abführbar ist.

11. Vorrichtung nach einem der vorhergehenden Ansprüche, wobei die Auflageoberfläche (18) austauschbar ist und verschiedene Oberflächenprofile einsetzbar sind.

12. Verfahren (100) zur Herstellung eines profilierten Bauteils, das die folgenden Schritte aufweist:
a) Anordnen (110) eines zu formenden Halbzeugs (20) auf einer Auflageoberfläche (18) einer Auflegeeinrichtung (12);
b) Anordnen (112) einer Druckvermittlungseinrichtung (16) auf dem Halbzeug (20), die eine biegeweiche Hülle zum Anliegen an dem Halbzeug (20) in einem nicht verformten ersten Zustand und zum Anliegen in einem umgeformten zweiten Zustand aufweist;
c) Anordnen (114) einer Andrückeinrichtung (14) auf der Druckvermittlungseinrichtung (16), wobei die Andrückeinrichtung (14) eine biegeweiche Fläche (26) aufweist, die an der Druckvermittlungseinrichtung (16) anliegt, wobei mit der biegeweichen Fläche die Kraft für die Umformung auf die Druckvermittlungseinrichtung (16) übertragen wird;
d) Andrücken (116) des zu formenden Halbzeugs (20) an die Auflageoberfläche (18) mittels der Andrückeinrichtung (14) über die Druckvermittlungseinrichtung (16) und gleichzeitiges Umformen,
**dadurch gekennzeichnet, dass** die Druckvermittlungseinrichtung (16) ferner eine druckübertragende und verformbare Füllung (24) aufweist und die biegeweiche Hülle (22) zum Halten eines in der Druckvermittlungseinrichtung (16) eingeschlossenen Volumens (40) der Füllung (24) ausgebildet ist.

13. Verfahren nach Anspruch 12, wobei die biegeweiche Fläche (26) der Andrückeinrichtung (14) auf der einen Seite an der Druckvermittlungseinrichtung (16) anliegt und die auf der anderen Seite mit einem Fluid mit Druck beaufschlagt wird zur Kraftübertragung für die Umformung; und
wobei für die Druckbeaufschlagung:
i) die biegeweiche Fläche (26) ein mit Druck beaufschlagbares Volumen (76) bildet; oder
ii) die biegeweiche Fläche (26) eine Vakuummembran (30) ist, wobei in Schritt d) ein Unterdruck in einem Bereich zwischen der Vakuummembran und der Auflageoberfläche (18) durch eine Vakuumeinrichtung erzeugt wird (118), so dass ein von außen auf die Vakuummembran einwirkender Luftdruck über die Druckvermittlungseinrichtung (16) wirkt und ein Umformen durch Anlegen des Halbzeugs (20) an die Auflageoberfläche (18) bewirkt wird.

14. Verfahren nach Anspruch 12, wobei die biegeweiche Fläche (26) der Andrückeinrichtung (14) derart an Haltepunkten gehalten wird, dass die biegeweiche Fläche (26) sowohl im nicht verformten ersten Zustand als auch im umgeformten zweiten Zustand eine konvexe Kontur bildet, und wobei die biegeweiche Fläche (26) zur Kraftübertragung für die Umformung mit einer Zugspannung beaufschlagt wird.

15. Verfahren nach Anspruch 12, 13 oder 14, wobei vor Schritt d) das Halbzeug (20) zum Erweichen mittels der Druckvermittlungseinrichtung (16) temperiert wird (122).

## Claims

1. Shaping device (10) for producing a profiled component, having:
- a lay-up device (12);
- a pressing device (14); and
- a pressure-relaying device (16);
wherein the lay-up device (12) has a lay-up surface (18) for laying-up a blank (20) to be formed;
wherein the pressing device (14) is provided for pressing the blank (20) to be formed against the lay-up surface (18);
wherein the pressure-relaying device (16) has a flexible shell (22) for bearing against the blank (20) in an un-deformed first state and for bearing in a shaped second state;
wherein the pressure-relaying device (16) can be arranged between the pressing device (14) and the blank (20) to be formed; and
wherein the pressing device (14) has a flexible surface (26) which bears against the pressure-relaying device (16); wherein the flexible surface (26) transmits the shaping force to the pressure-relaying device (16),
**characterized in that** the pressure-relaying device (16) further has a pressure-transmitting and deformable filling (24) and the flexible shell (22) is designed to hold a volume (40) of the filling (24) enclosed in the pressure-relaying device (16).

2. Device according to Claim 1, wherein the blank (20) to be formed is a fibre-reinforced composite material (60).

3. Device according to Claim 1 or 2, wherein the flexible surface (26) of the pressing device (14) bears on one hand against the pressure-relaying device (16) and on the other hand can be pressurized with a fluid in order to transmit force for the shaping; and
wherein, for pressurizing:
i) the flexible surface (26) forms a volume (76) which can be pressurized; or
ii) the flexible surface (26) is a vacuum membrane (30), wherein a vacuum device (32) is provided in order to generate a reduced pressure in a region between the vacuum membrane (30) and the lay-up surface (18), such that ambient air pressure acting on the vacuum membrane (30) from outside brings about shaping by pressing the blank (20) against the lay-up surface (18).

4. Device according to Claim 1 or 2, wherein the flexible surface (26) of the pressing device (14) is held at retaining points such that the flexible surface (26) forms a convex contour both in the un-deformed first state and in the shaped second state, and wherein the flexible surface (26) can be loaded in tension in order to transmit force for the shaping.

5. Device according to one of the preceding claims, wherein the pressure-relaying device (16) is provided peripherally with a flexible shell (22).

6. Device according to one of the preceding claims, wherein the pressure-relaying device (16) has, as filling (24), at least one of the group of:
- gaseous fluids;
- liquids;
- gels; and
- loose bulk materials.

7. Device according to Claim 6, wherein the filling of the pressure-relaying device (16) has a dynamic viscosity of at least 100 Pa·s.

8. Device according to Claim 3, wherein the volume (40) of the pressure-relaying device (16) is designed such that, when the pressure-relaying device (16) bears against the lay-up surface (18), all of the recesses (42) of the lay-up surface (18) are filled by the pressure-relaying device (16), such that the vacuum membrane (30) forms a convex shell surface (44).

9. Device according to one of the preceding claims, wherein the pressure-relaying device (16) has an interchangeable pressure-relaying element (46); and/or a multiplicity (48) of pressure-relaying elements (50).

10. Device according to one of the preceding claims, wherein the temperature of the pressure-relaying device (16) can be controlled; and wherein the pressure-relaying device (16) can be used to supply or remove thermal energy (70) to or from a blank (20) that is to be formed.

11. Device according to one of the preceding claims, wherein the lay-up surface (18) is interchangeable and various surface profiles can be used.

12. Method (100) for producing a profiled component, having the following steps:
a) arranging (110) a blank (20) that is to be formed on a lay-up surface (18) of a lay-up device (12);
b) arranging (112) on the blank (20) a pressure-relaying device (16) which has a flexible shell for bearing against the blank (20) in an un-deformed first state and for bearing in a shaped second state;
c) arranging (114) a pressing device (14) on the pressure-conveying device (16), wherein the pressing device (14) has a flexible surface (26) which bears against the pressure-relaying device (16), wherein the flexible surface transmits the shaping force to the pressure-relaying device (16);
d) pressing (116) the blank (20) to be formed against the lay-up surface (18) by means of the pressing device (14) via the pressure-relaying device (16), and simultaneously shaping it,
**characterized in that** the pressure-relaying device (16) further has a pressure-transmitting and deformable filling (24) and the flexible shell (22) is designed to hold a volume (40) of the filling (24) enclosed in the pressure-relaying device (16).

13. Method according to Claim 12, wherein the flexible surface (26) of the pressing device (14) bears on one hand against the pressure-relaying device (16) and on the other hand can be pressurized with a fluid in order to transmit force for the shaping; and
wherein, for pressurizing:
i) the flexible surface (26) forms a volume (76) which can be pressurized; or
ii) the flexible surface (26) is a vacuum membrane (30), wherein in step d) a vacuum device is used (118) to generate a reduced pressure in a region between the vacuum membrane and the lay-up surface (18), such that air pressure acting on the vacuum membrane from outside acts via the pressure-relaying device (16) and shaping is brought about by pressing the blank (20) against the lay-up surface (18).

14. Method according to Claim 12, wherein the flexible surface (26) of the pressing device (14) is held at retaining points such that the flexible surface (26) forms a convex contour both in the un-deformed first state and in the shaped second state, and wherein the flexible surface (26) can be loaded in tension in order to transmit force for the shaping.

15. Method according to Claim 12, 13 or 14, wherein, prior to step d), the temperature of the blank (20) is controlled (122) by means of the pressure-relaying device (16) such that it softens.

## Revendications

1. Ensemble de façonnage (10) destiné à produire un composant profilé, l'ensemble présentant :
un dispositif de pose (12),
un dispositif de poussée (14) et
un dispositif (16) de transmission de pression,
dispositif de pose (12) présentant une surface de pose (18) permettant de poser une ébauche (20) à façonner,
le dispositif de poussée (14) étant prévu pour repousser l'ébauche (20) à façonner contre la surface de pose (18),
le dispositif (16) de transmission de pression présentant une enveloppe déformable (22) destinée à être placée sur l'ébauche (20) dans un premier état non déformé et à y être placée dans un deuxième état déformé,
le dispositif (16) de transmission de pression pouvant être disposé entre le dispositif de poussée (14) et l'ébauche (20) à façonner,
le dispositif de poussée (14) présentant une surface déformable (26) qui repose contre le dispositif (16) de transmission de pression, la surface déformable (26) transmettant la force de façonnage sur le dispositif (16) de transmission de pression, **caractérisé en ce que**
le dispositif (16) de transmission de pression présente en outre une charge déformable (24) de transmission de pression et
**en ce que** l'enveloppe déformable (22) est configurée pour retenir un volume (40) de charge (24) enfermé dans le dispositif (16) de transmission de pression.

2. Ensemble selon la revendication 1, dans lequel l'ébauche à façonner (20) est un matériau composite (60) renforcé de fibres.

3. Ensemble selon les revendications 1 ou 2, dans lequel la surface déformable (26) du dispositif de poussée (14) repose par un côté sur le dispositif (16) de transmission de pression, un fluide sous pression pouvant être appliqué sur son autre côté pour transmettre la force de façonnage, tandis que pour l'application de la pression :
i) la surface déformable (26) forme un volume (76) sur lequel une pression peut être appliquée ou
ii) la surface déformable (26) est une membrane sous vide (30), un dispositif (32) de formation de vide étant prévu pour former une dépression dans une partie située entre la membrane sous vide (30) et la surface de pose (18) de telle sorte que la pression de l'air ambiant agissant de l'extérieur sur la membrane sous vide (30) a pour effet un façonnage lorsque l'ébauche (20) est placée sur la surface de pose (18).

4. Ensemble selon les revendications 1 ou 2, dans lequel la surface déformable (26) du dispositif de poussée (14) est maintenue en des points de maintien de telle sorte que la surface déformable (26) forme un contour convexe aussi bien dans le premier état non déformé que dans le deuxième état déformé, une contrainte de traction pouvant être appliquée sur la surface déformable (26) pour transmettre la force de façonnage.

5. Ensemble selon l'une des revendications précédentes, dans lequel le dispositif (16) de transmission de pression est doté à sa périphérie d'une enveloppe déformable (22).

6. Ensemble selon l'une des revendications précédentes, dans lequel le dispositif (16) de transmission de pression présente comme charge (24) au moins l'un des groupes suivants :
des fluides gazeux,
des liquides,
des gels et
des corps solides versables.

7. Ensemble selon la revendication 6, dans lequel la charge du dispositif (16) de transmission de pression présente une viscosité dynamique d'au moins 100 Pa.s.

8. Ensemble selon la revendication 3, dans lequel le volume (40) du dispositif (16) de transmission de pression est configuré de telle sorte que lorsque le dispositif (16) de transmission de pression est placé sur la surface de pose (18), tous les creux (42) de la surface de pose (18) sont remplis par le dispositif (16) de transmission de pression de telle sorte que la membrane sous vide (30) forme une surface d'enveloppe convexe (44).

9. Ensemble selon l'une des revendications précédentes, dans lequel le dispositif (16) de transmission de pression présente un élément remplaçable (46) de transmission de pression et/ou une pluralité (48) d'éléments (50) de transmission de pression.

10. Ensemble selon l'une des revendications précédentes, dans lequel le dispositif (16) de transmission de pression peut être amené et maintenu à température et dans lequel de l'énergie thermique (70) peut être amenée et extraite d'une ébauche (20) à façonner à l'aide du dispositif (16) de transmission de pression.

11. Ensemble selon l'une des revendications précédentes, dans lequel la surface de pose (18) est remplaçable et dans lequel différents profils de surface peuvent être utilisés.

12. Procédé (100) de production d'un composant profilé, le procédé présentant les étapes suivantes :
a) placement (110) d'une ébauche (20) à façonner sur une surface de pose (18) d'un dispositif de pose (12),
b) placement (112) d'un dispositif (16) de transmission de pression sur l'ébauche (20), le dispositif de transmission de pression présentant une enveloppe déformable destinée à être placée sur l'ébauche (20) dans un premier état non déformé et à y être placée dans un deuxième état déformé,
c) placement (114) d'un dispositif de poussée (14) sur le dispositif (16) de transmission de pression, le dispositif de poussée (14) présentant une surface déformable (26) qui repose sur le dispositif (16) de transmission de pression, la force de façonnage étant transmise par la surface déformable sur le dispositif (16) de transmission de pression,
d) poussée (116) de l'ébauche (20) à façonner sur la surface de pose (18) au moyen du dispositif de poussée (14) par l'intermédiaire du dispositif (16) de transmission de pression avec en même temps façonnage, **caractérisé en ce que**
le dispositif (16) de transmission de pression présente en outre une charge déformable (24) de transmission de pression, l'enveloppe déformable (22) étant configurée pour retenir un volume (40) de charge (24) enfermé dans le dispositif (16) de transmission de pression.

13. Procédé selon la revendication 12, dans lequel la surface déformable (26) du dispositif de poussée (14) repose par un côté sur le dispositif (16) de transmission de pression et en ce qu'un fluide sous pression peut être appliqué sur l'autre côté pour transmettre la force de façonnage, tandis que pour l'application de la pression :
i) la surface déformable (26) forme un volume (76) sur lequel une pression peut être appliquée ou
ii) la surface déformable (26) est une membrane sous vide (30), un dispositif de formation de vide étant prévu dans l'étape d) pour former (118) une dépression dans une partie située entre la membrane sous vide et la surface de pose (18) de telle sorte que la pression de l'air ambiant agissant de l'extérieur sur la membrane sous vide agit au moyen du dispositif (16) de transmission depression et a pour effet un façonnage lorsque l'ébauche (20) est placée sur la surface de pose (18).

14. Procédé selon la revendication 12, dans lequel la surface déformable (26) du dispositif de poussée (14) est maintenue en des points de maintien de telle sorte que la surface déformable (26) forme un contour convexe aussi bien dans le premier état non déformé que dans le deuxième état déformé, une contrainte de traction pouvant être appliquée sur la surface déformable (26) pour transmettre la force de façonnage.

15. Procédé selon les revendications 12, 13 ou 14, dans lequel avant l'étape d), l'ébauche (20) est amenée et maintenue (122) à une température d'amollissement au moyen du dispositif (16) de transmission de pression.
